# EUROPÄISCHE PATENTSCHRIFT

(11) **EP 3 161 343 B1**
(45) Veröffentlichungstag und Bekanntmachung des Hinweises auf die Patenterteilung: **12.12.2018**
(21) Anmeldenummer: 15736388.8
(22) Anmeldetag: 08.05.2015
(51) Int. Cl.: F16F 15/14

(54) **FLIEHKRAFTPENDEL**
CENTRIFUGAL PENDULUM
PENDULE CENTRIFUGE

(30) Priorität: 25.06.2014 DE 102014212172
(43) Veröffentlichungstag der Anmeldung: 03.05.2017
(73) Patentinhaber: Schaeffler Technologies AG & Co. KG, 91074 Herzogenaurach (DE)
(72) Erfinder: RUSCH, Alain, F- 67760 Gambsheim (FR); DUSHEV, Alexander, 77883 Ottenhöfen (DE); GERHARDT, Friedrich, 77694 Kehl-Leutesheim (DE)
(86) Internationale Anmeldenummer: PCT/DE2015/200305
(87) Internationale Veröffentlichungsnummer: WO 2015/197058

(56) Entgegenhaltungen:
- EP-A1- 2 667 050
- DE-A1-102013 211 680
- FR-A1- 2 986 592

## Beschreibung

Die vorliegende Erfindung betrifft ein Fliehkraftpendel gemäß dem Oberbegriff des Patentanspruchs 1. Insbesondere betrifft die Erfindung ein Fliehkraftpendel mit einem um eine Drehachse verdrehbar angeordneten Pendelflansch und über den Umfang verteilt angeordneten, im Fliehkraftfeld des drehenden Pendelflanschs pendelnd an diesem aufgenommenen Pendeln.

Fliehkraftpendel dienen der Reduzierung von Torsionsschwingungen und enthalten einen um eine Drehachse verdrehbaren Pendelflansch und Pendel mit voreingestellten Massen. Diese Pendel führen im Feld der Zentrifugalbeschleunigung Schwingungen auf vorgegebenen Bahnen aus, wenn sie durch Drehzahlungleichförmigkeiten, die beispielsweise durch drehschwingungsbehaftete Brennkraftmaschinen von Antriebssträngen von Kraftfahrzeugen eingetragen werden, angeregt werden. Durch diese Schwingungen wird der Erregerschwingung der Drehungleichförmigkeiten an den Drehmomentanstiegen Energie entzogen und bei gegenüber einem mittleren Drehmoment abfallenden Drehmomenten wieder zugeführt, so dass es zu einer Beruhigung der Erregerschwingung kommt. Das Fliehkraftpendel wirkt hierbei infolge der bei zunehmenden Drehzahlen zunehmenden Fliehkraft als drehzahladaptiver Drehschwingungstilger, da sowohl die Eigenfrequenz der Fliehkraftpendelschwingung als auch die Erregerfrequenz proportional zur Drehzahl sind. Beispielsweise ist aus der DE 10 2011 086 532 A1 ein an einer Kupplungsscheibe einer Reibungskupplung aufgenommenes Fliehkraftpendel bekannt, welches einen Pendelflansch aufweist, an dem die Pendel auf Rollenbahnen der Pendel und des Pendelflanschs mittels Pendelrollen geführt sind. Unter Fliehkraft sind die Pendel durch die Zentrifugalkraft nach außen gespannt.

Sobald die Schwerkraft der jeweils oben liegenden Pendel die auf die Pendel wirkende Fliehkraft überschreitet, beispielsweise bei geringen Drehzahlen des Pendelflanschs beim Start oder Stopp der den Pendelflansch antreibenden Brennkraftmaschine, einem Auskuppeln der Reibungskupplung oder bei einem Anhalten des Fahrzeugs fallen die Pendelmassen unter Schwerkraft gegen Anschläge des Pendelflanschs. Die hierdurch entstehenden Geräusche wirken komfortmindernd. Um diese Geräusche zu reduzieren, kann zwischen den Pendeln und den Anschlägen ein Dämpfungselement aus Kunststoff wie Elastomer oder Gummi vorgesehen sein. Desweiteren ist aus der WO 2013/13117841 A1 ein Fliehkraftpendel in einem Zweimassenschwungrad bekannt, bei dem Dämpfungselemente an den Pendeln angeordnet sind, die Anschlaggeräusche der Pendel gegenüber dem Pendelflansch verringern. Hierbei sind die Pendel jeweils aus drei axial geschichteten Blechteilen gebildet, wobei das mittlere Blechteil das Dämpfungselement aufnimmt und die beiden das mittlere Blechteil flankierenden Blechteile eine axiale Sicherung des Dämpfungselements bewirken.

Aus der FR 2 986 592 A1 ist ein Fliehkraftpendel bekannt, das auf den Oberbegriff des Patentanspruchs 1 lesbar ist.

Aufgabe der Erfindung ist die vorteilhafte Weiterbildung eines Fliehkraftpendels mit einem einfachen Aufbau von mit einem Dämpfungselement versehenen Pendeln.

Die Aufgabe wird durch den Gegenstand des Patentanspruchs 1 gelöst. Die von diesem abhängigen Patentansprüche geben vorteilhafte Ausführungsformen des Gegenstands des Patentanspruchs 1 wieder.

Das vorgeschlagene Fliehkraftpendel enthält einen um eine Drehachse verdrehbaren Pendelflansch und über den Umfang verteilte, in dem Pendelflansch im Fliehkraftfeld des drehenden Pendelflanschs pendelnd eingehängte Pendel. Das Fliehkraftpendel kann an einer Kupplungsscheibe, an einem Schwungrad oder einem weiteren Antriebsbauteil aufgenommen sein, ausgangsseitig oder eingangsseitig in einen Drehschwingungsdämpfer, beispielsweise ein Zweimassenschwungrad, in einen hydrodynamischen Drehmomentwandler, in eine Reibungskupplung, in eine Doppelkupplung oder in eine vergleichbare Komponente eines Antriebsstrangs eines Kraftfahrzeugs integriert sein. Die Pendel sind an bevorzugt jeweils zwei in Umfangsrichtung beabstandeten Schwenklagern an dem Pendelflansch aufgenommen. Die Art der Pendelschwingung, beispielsweise einer Pendelschwingung eines mit monofilarer oder bifilarer mit paralleler oder trapezförmiger ausgebildeter Fadenanordnung oder in Freiform schwingenden Fadenpendels, ist durch eine entsprechende Ausbildung von beispielsweise an Wandungen von Ausschnitten vorgesehenen Rollbahnen in den Pendeln und im Pendelflansch vorgesehen, auf denen pro Schwenklager eine jeweils die Rollbahnen übergreifende Pendelrolle abwälzt.

In vorteilhafter Weise ist hierbei zumindest ein Teil der Pendel jeweils aus ausschließlich zwei gleichartig, das heißt, als Gleichteile ausgebildeten, ein radial innen an den Pendeln angeordnetes Dämpfungselement axial gesichert aufnehmenden Blechteilen gebildet. Hierbei nehmen jeweils beide Blechteile das Dämpfungselement mittels einer Funktionsteilung axial gesichert auf, wobei ein Blechteil eine axiale Sicherung in die eine Richtung und das andere Blechteil eine axiale Sicherung des Dämpfungselements in die andere Richtung bereitstellt. Hierdurch kann die Anzahl der Blechteile auf zwei begrenzt werden, wobei eine schichtweise Fertigung der Pendel unter Vermeidung eines Stoffschlusses der Blechteile mit dem Dämpfungselement erzielt wird. Die Blechteile sind gegenüber ihrer Mittelachse asymmetrisch ausgebildet. Werden diese Blechteile gegensinnig, das heißt, um die Mittelachse um 180° verdreht aneinander angelegt, bilden sich jeweils in eine axiale Richtung an jedem Blechteil axiale Anschlagbereiche aus, die der axialen Sicherung des Dämpfungselements in beide axiale Richtungen dienen, ohne weiter Sicherungsmittel vorsehen zu müssen. Das Dämpfungselement ist hierbei komplementär zu den Anschlagbereichen der Blechteile im gefügten Zustand ausgebildet, so dass dieses axial beidseitig durch diese gesichert ist und nicht in Kontakt mit dem Pendelflansch tritt.

Das Dämpfungselement ist hierzu bevorzugt als Spritzgießteil aus Kunststoff hergestellt. Beispielsweise kann das Dämpfungselement in Umfangsrichtung betrachtet einen mittleren Führungsbereich und zwei endseitige Ausnehmungen aufweisen, die jeweils an Anschlagbereiche mit jeweils einem axialen Anschlag der Blechteile angelegt sind. Hierbei sind Ausnehmungen und Anschlagbereiche der beiden Blechteile gegenüber der Mittelachse der Blechteile jeweils spiegelverkehrt vorgesehen, so dass eine gegenseitige axiale Abstützung der Blechteile und des Dämpfungselements erzielt wird. Hierdurch sind die Blechteile mittels des Dämpfungselements axial gegeneinander und das Dämpfungselement gegenüber den Blechteilen gesichert. Das Dämpfungselement kann radial verliergesichert in die Blechteile eingerastet, eingeklipst oder in ähnlicher Weise mit diesen verbunden sein. Alternativ oder zusätzlich kann der Führungsbereich eine radiale Verliersicherung bilden, indem die Blechteile über jeweils einen gegenüber der radialen Richtung schräg ausgebildeten Schlitz verfügen, so dass entsprechende Ausformungen des Dämpfungselements unter Bildung radialer Hinterschnitte in die Schlitze eingreifen und das Dämpfungselement verliergesichert an den Blechteilen halten.

In einer weiteren vorteilhaften Ausführungsform der Pendel kann alternativ oder zusätzlich vorgesehen sein, an den voneinander wegweisenden Oberflächen der Blechteile radial innen jeweils eine axial eingeformte Anprägung anzubringen. In diese Anprägungen sind radial erweiterte Wangen des Dämpfungselements erstreckt, so dass das Dämpfungselement die Blechteile an den Anprägungen axial umgreift und damit sowohl die Blechteile als auch das Dämpfungselement axial gegeneinander gesichert und verliergesichert aufeinander aufgenommen sind. Aufgrund des Eingriffs der Wangen in die Anprägungen wird eine axialen Bauraum sparende Ausbildung mit einer planen Oberfläche des Pendels erzielt. Auf diese Weise wird auch ein Kontakt des Dämpfungselements mit dem Pendelflansch, beispielsweise einem axial beidseitig der Pendel angeordneten Pendelflansch vermieden.

Gemäß einer weiteren vorteilhaften Ausführungsform kann das Dämpfungselement axial zwischen den beiden Blechteilen einen Pufferbereich bilden. Beispielsweise kann eine weitere Reduzierung der Geräusche erzielt werden, wenn der Pufferbereich des Dämpfungselements radial über den gesamten Kontaktbereich der Blechteile radial erweitert ist.

Alternativ oder zusätzlich können die Blechteile mit einer höheren Steifigkeit versehen werden, wenn die beiden Blechteile beispielsweise in Umfangsrichtung zwischen den beiden Schwenklagern miteinander vernietet sind.

Eine weitere vorteilhafte Ausführungsform kann der Dämpfung von Geräuschen von einander berührenden Pendeln dienen. Hierzu ist an dem Dämpfungselement zusätzlich zu radial innen angeordneten Anschlagbereichen zur Dämpfung von Geräuschen bei nach radial innen fallenden Pendeln an zumindest einem umfangsseitigen Ende der Pendel ein Anschlagpuffer für ein in Umfangsrichtung benachbartes Pendel ausgebildet.

Das Fliehkraftpendel ist je nach Anforderung mit einem aus einem Flanschteil gebildeten Pendelflansch ausgestattet, an dem beidseitig Pendel angeordnet sind und axial gegenüber liegende Pendel zu Pendelmassenpaaren verbunden sind. Desweiteren können Fliehkraftpendel mit einem Pendelflansch vorgesehen sein, der aus zwei Trägerteilen gebildet ist, welche die Pendel axial zwischen sich aufnehmen. Bei dieser Ausführungsform kann vorgesehen sein, einen definierten, bevorzugt leichten Reibeingriff zwischen den Pendeln und den Trägerteilen vorzusehen. Hierzu können die beiden Blechteile mittels eines zwischen den beiden Blechteilen angeordneten, axial wirksamen Energiespeichers, beispielsweise eine oder mehrere Schraubendruckfedern, Tellerfedern, Spiralfedern oder dergleichen gegen die Trägerteile axial vorgespannt sein. Eine Begrenzung des Reibmoments kann mittels des Dämpfungselements erfolgen, welches den axialen Abstand der Blechteile gegeneinander begrenzen kann.

Die Erfindung wird anhand des in den Figuren 1 bis 11 dargestellten Ausführungsbeispiels näher erläutert. Dabei zeigen:
- Figur 1: ein Fliehkraftpendel in Ansicht bei abgenommenem vorderem Trägerteil,
- Figur 2: das komplette Fliehkraftpendel der Figur 1 in Ansicht,
- Figur 3: einen Schnitt durch das Fliehkraftpendel der Figur 2 entlang der Schnittlinie G-G,
- Figur 4: einen Schnitt durch das Fliehkraftpendel der Figur 2 entlang der Schnittlinie F-F,
- Figur 5: einen Schnitt durch das Fliehkraftpendel der Figur 2 entlang der Schnittlinie E-E,
- Figur 6: das Fliehkraftpendel der vorhergehenden Figuren in Explosionsdarstellung,
- Figur 7: ein Pendel des Fliehkraftpendels der vorhergehenden Figuren in Explosionsdarstellung,
- Figur 8: einen Schnitt durch ein gegenüber dem Pendel der vorhergehenden Figuren abgeändertes Pendel,
- Figur 9: einen Schnitt durch ein gegenüber dem Pendel der vorhergehenden Figuren abgeändertes Pendel,
- Figur 10: einen Schnitt durch ein gegenüber dem Pendel der vorhergehenden Figuren abgeändertes Pendel
und
- Figur 11: einen Schnitt durch ein gegenüber dem Pendel der vorhergehenden Figuren abgeändertes Pendel.

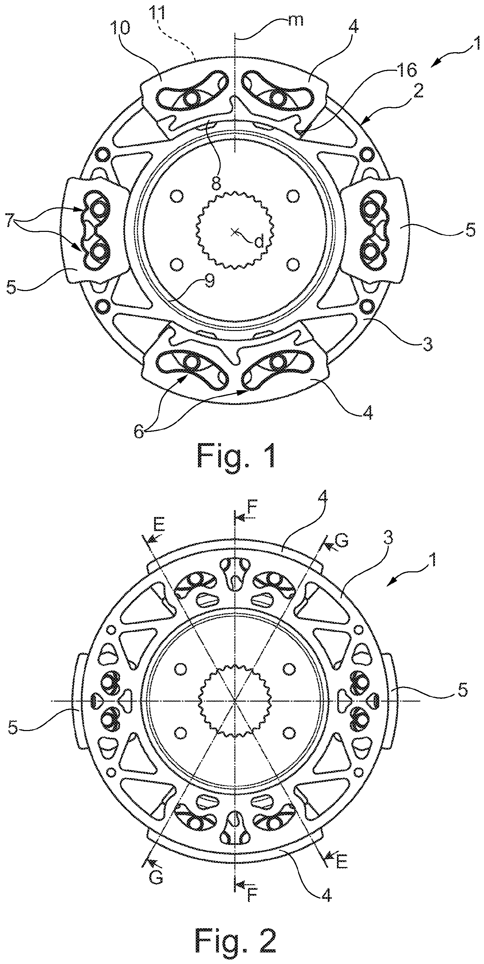

Die Figur 1 zeigt das um die Drehachse d verdrehbar angeordnete Fliehkraftpendel 1 mit dem beispielsweise auf einer Kupplungsscheibe aufgenommenen Pendelflansch 2. Der Pendelflansch ist aus zwei radial außen axial beabstandeten und radial innen aneinander liegenden Trägerteilen 3 gebildet, wobei in der gezeigten Darstellung das obere Trägerteil abgenommen ist. Hierdurch sind die über den Umfang verteilt angeordneten Pendel 4, 5 einsehbar. Die Pendel 4, 5 sind mittels der Pendellager 6, 7 in an sich bekannter Weise im Fliehkraftfeld des um die Drehachse d drehenden Pendelflanschs entlang von Pendelbahnen pendelnd an dem Pendelflansch 2 aufgehängt.

Bei nicht ausreichender Fliehkraft fallen die jeweils radial oberhalb der Drehachse d angeordneten Pendelmassen 4, 5 schwerkraftbedingt nach radial innen und schlagen an dem axialen Absatz 9 des Pendelflanschs 2 an. Um Anschlaggeräusche zu vermindern, ist an den Pendeln 4 jeweils radial innen ein Dämpfungselement 8 vorgesehen. Die Pendel 5 kommen infolge ihrer geringeren Masse ohne Dämpfungselement aus, können jedoch mit einem Dämpfungselement entsprechend dem Dämpfungselement 8 versehen werden. Alternativ kann der axiale Absatz 9 mit einem Dämpfungsring versehen oder mit Dämpfungsmaterial beschichtet sein.

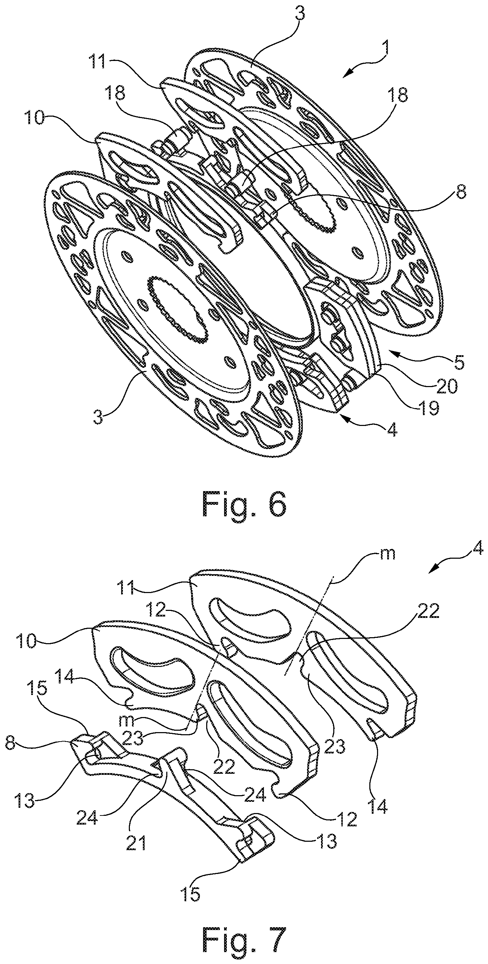

Die Pendel 4 sind aus zwei axial aneinander gelegten, aus Gleichteilen gebildeten Blechteilen 10 gebildet, die entlang der Mittelachse m asymmetrisch ausgebildet sind. Durch gegensinniges Aneinanderlegen 180° gegenüber der Mittelachse m verdreht bilden die Blechteile 10, 11 nicht einsehbare axiale Anschlagbereiche aus, die das Dämpfungselement 8 axial sichern und verliersicher aufnehmen. Die genaue Ausbildung dieser Aufnahme des Dämpfungselements 8 an den Blechteilen 10 ist der Figur 7 zu entnehmen. Das Dämpfungselement 8 ist an einer endseitigen Stirnseite radial nach außen erweitert und bildet dadurch beispielsweise hier in Zugrichtung den Anschlagpuffer 16 gegenüber den Pendeln 4.

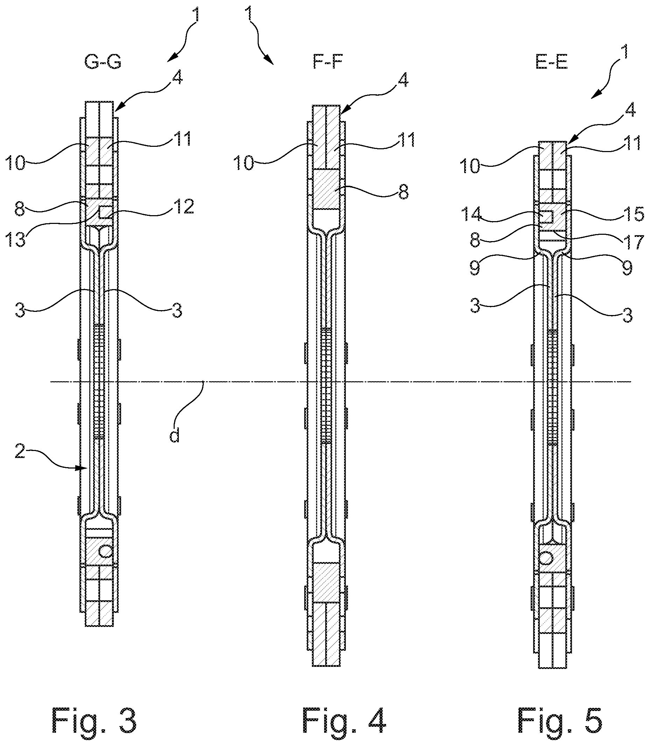

Die Figur 2 zeigt das Fliehkraftpendel 1 der Figur 1 bei aufgesetztem oberem Trägerteil 3. Die Pendel 4, 5 sind dabei axial zwischen den Trägerteilen 3 angeordnet. Die nachfolgenden Figuren 3 bis 5 geben Schnittdarstellungen entlang der Schnittlinien E-E, F-F und G-G der Figur 2 wieder.

Die Figur 3 zeigt das Fliehkraftpendel 1 entlang der Schnittlinie G-G der Figur 2 mit den beiden den Pendelflansch 2 bildenden Trägerteilen 3 und den in diese eingehängten Pendeln 4. Die Pendel 4 sind aus den beiden als Gleichteile ausgebildeten und gegensinnig aneinander gelegten Blechteilen 10, 11 und dem an diesem axial fixiert und verliersicher aufgenommenen Dämpfungselement 8 gebildet. Der Schnitt ist durch den ersten endseitigen Bereich der Pendel 4 geführt. In diesem Bereich weist das Blechteil 11 den axialen Anschlagbereich 12 auf, an dem sich das Dämpfungselement mittels der Ausnehmung 13 axial abstützt und dadurch axial in Richtung des Blechteils 11 gehalten und verliergesichert an dem Blechteil 11 aufgenommen ist.

Die Figur 4 zeigt das Fliehkraftpendel 1 entlang der durch die Mittelachse m (Figur 1) der Pendel 4 verlaufenden Schnittlinie F-F. In diesem Bereich sind beide Blechteile 10, 11 entsprechend ausgespart, so dass das Dämpfungselement 8 den vollständigen Querschnitt über die axiale Breite beider Blechteile 10, 11 aufweist.

Die Figur 5 zeigt das Fliehkraftpendel 1 entlang der Schnittlinie E-E der Figur 1. Der Schnitt E-E ist durch den zweiten endseitigen Bereich der Pendel 4 geführt. Durch die Verdrehung des Blechteils 10 gegenüber dem Blechteil 11 um die Mittelachse m (Figur 1) um 180° und der dadurch gegensinnigen Anlage der asymmetrischen Blechteile 10, 11 aneinander liegt hier der axiale Anschlagbereich 14 auf Seiten des Blechteils 10. Das Dämpfungselement 8 stützt sich mittels der Ausnehmung 15 damit auch gegen das Blechteil 10 ab und ist damit axial beidseitig axial abgestützt und verliersicher an den Blechteilen 10, 11 aufgenommen. Das Dämpfungselement 8 dämpft mittels der radial inneren Anschlagfläche 17 Geräusche beim Anschlagen des Pendels 5 an dem axialen Absatz 9 der beiden Trägerteile 3, wenn die auf die Pendel 4 wirkende Fliehkraft zu gering ist, um die über der Drehachse d angeordneten Pendel 4 gegen die Schwerkraft in ihrer Pendelposition zu halten.

Die Figur 6 zeigt das Fliehkraftpendel 1 in Explosionsdarstellung mit dem aus den Trägerteilen 3 gebildeten Pendelflansch, den Pendeln 4, 5 sowie den die Pendellager mit den Trägerteilen 3 und den Pendeln 4, 5 bildenden Pendelrollen 18. Die Pendel 4 sind aus den beiden gegensinnig aneinander gelegten Blechteilen 10, 11 und dem Dämpfungselement 8 gebildet. Die Pendel 5 sind aus den beiden aneinander gelegten, bevorzugt aus Gleichteilen gebildeten Blechteilen 19, 20 gebildet.

Die Figur 7 zeigt ein Pendel 4 der Figuren 1 bis 6 in Explosionsdarstellung mit den Blechteilen 10, 11 und dem Dämpfungselement 8. Das bevorzugt mittels eines Spritzgießverfahrens hergestellte Dämpfungselement 8 weist jeweils Ausnehmungen 13, 15 und die Führungsbereiche 21 auf. Die beiden Blechteile 10, 11 sind bezüglich deren Mittelachsen m asymmetrisch mit den Anschlagbereichen 12, 14 ausgebildet. Durch Verdrehen eines Blechteils 10 gegenüber dem anderen Blechteil 11 erfolgt insgesamt eine axiale Abstützung der Ausnehmungen 13, 15 an den Anschlagbereichen 12, 14 beider Blechteile 10, 11, die axiale Fixierung der beiden Blechteile 10, 11 gegeneinander erfolgt mittels der an den Schlitzen 22 benachbarten Anschlagbereiche 23, die sich an den Ausnehmungen 24 des Führungsbereichs 21 in umgekehrter axialer Wirkrichtung gegenüber den Anschlagbereichen 12, 14 abstützen.

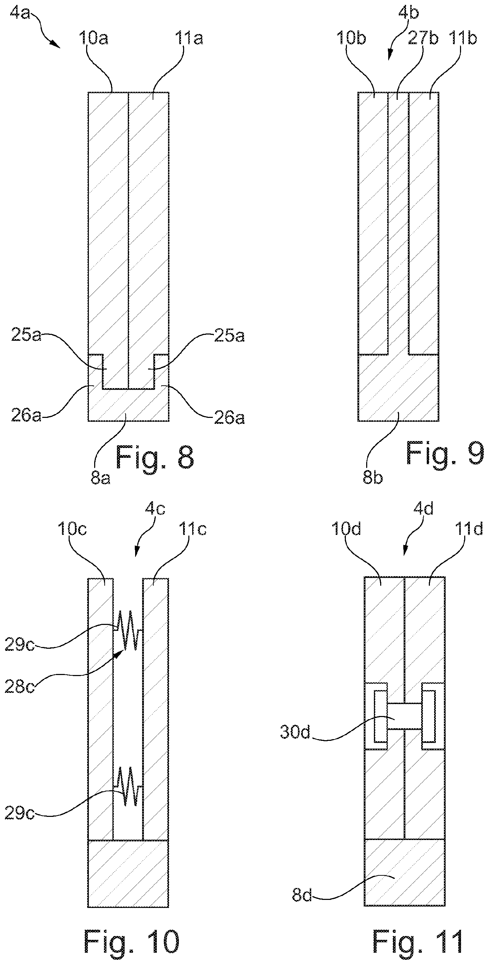

Die Figur 8 zeigt einen Schnitt durch ein gegenüber dem Pendel 4 der Figur 7 abgeändertes Pendel 4a. Die Blechteile 10a, 11a des Pendels 4a weisen voneinander abgewandte, axiale Anprägungen 25a auf, in die radial nach außen erweiterte Wangen 26a des Dämpfungselements 8a erstreckt sind. Hierdurch erfolgt sowohl eine axiale Fixierung des Dämpfungselements 8a gegenüber den Blechteilen 10a, 11a als auch eine Fixierung der beiden Blechteile 10a, 11a aufeinander. Durch die axialen Anprägungen 25a wird eine beidseitig plane Oberfläche der Wangen 26a und der Blechteile 10a, 11a erzielt.

Die Figur 9 zeigt einen Schnitt durch das gegenüber dem Pendel 4 der Figur 7 abgeänderte Pendel 4b. In Abänderung zu diesem ist an dem Dämpfungselement 8b der Pufferbereich 27b vorgesehen, der sich axial zwischen den beiden Blechteilen 10b, 11b nach radial außen erstreckt und eine axiale Dämpfung zwischen den beiden Blechteilen 10b, 11b bewirkt.

Die Figur 10 zeigt eine weitere Variante des Pendels 4 der Figur 7 im Schnitt. Das Pendel 4c unterscheidet sich hierbei durch axial gegen die Trägerteile 3 (Figur 3) vorgespannte Blechteile 10c, 11c. Hierzu ist zwischen den beiden Blechteilen 10c, 11c der aus den Schraubenfedern 29c gebildete, axial wirksame Energiespeicher 28c vorgesehen. Durch die axiale Vorspannung gegen die Trägerteile wird ein vorgegebenes Reibmoment zwischen den Pendeln 4c und dem Pendelflansch 2 (Figur 1) erzeugt. Figur 11 zeigt einen Schnitt durch das Pendel 4d, dessen Blechteile 10d, 11d in Abänderung zum Pendel 4 der Figur 7 mittels der Niete 30d miteinander vernietet sind, um eine höhere Steifigkeit der Blechteile 10d, 11d gegeneinander zu erzielen. Zusätzlich kann eine axiale Fixierung der Blechteile 10d, 11d gegeneinander mittels des Dämpfungselements 8d entfallen, so dass dieses gegenüber dem Dämpfungselement 8 der Figur 7 einfacher, beispielsweise ohne den Führungsbereich 21 ausgebildet werden kann.

### Bezugszeichenliste

- 1: Fliehkraftpendel
- 2: Pendelflansch
- 3: Trägerteil
- 4: Pendel
- 4a: Pendel
- 4b: Pendel
- 4c: Pendel
- 4d: Pendel
- 5: Pendel
- 6: Pendellager
- 7: Pendellager
- 8: Dämpfungselement
- 8a: Dämpfungselement
- 8b: Dämpfungselement
- 8d: Dämpfungselement
- 9: Absatz
- 10: Blechteil
- 10a: Blechteil
- 10b: Blechteil
- 10c: Blechteil
- 10d: Blechteil
- 11: Blechteil
- 11a: Blechteil
- 11b: Blechteil
- 11c: Blechteil
- 11d: Blechteil
- 12: Anschlagbereich
- 13: Ausnehmung
- 14: Anschlagbereich
- 15: Ausnehmung
- 16: Anschlagpuffer
- 17: Anschlagfläche
- 18: Pendelrolle
- 19: Blechteil
- 20: Blechteil
- 21: Führungsbereich
- 22: Schlitz
- 23: Anschlagbereich
- 24: Ausnehmung
- 25a: Anprägung
- 26a: Wange
- 27b: Pufferbereich
- 28c: Energiespeicher
- 29c: Schraubenfeder
- 30d: Niet
- d: Drehachse
- m: Mittelachse
- E-E: Schnittlinie
- F-F: Schnittlinie
- G-G: Schnittlinie

## Patentansprüche

1. Fliehkraftpendel (1) mit einem um eine Drehachse (d) verdrehbar angeordneten Pendelflansch (2) und über den Umfang verteilt angeordneten, im Fliehkraftfeld des drehenden Pendelflanschs pendelnd an diesem aufgenommenen Pendeln (4, 4a, 4b, 4c, 4d, 5), wobei zumindest ein Teil der Pendel (4, 4a, 4b, 4c, 4d) jeweils aus zwei gleichartig ausgebildeten, ein radial innen an den Pendeln (4, 4a, 4b, 4c, 4d) angeordnetes Dämpfungselement (8, 8a, 8b, 8d) axial gesichert aufnehmenden Blechteilen (10, 10a, 10b, 10c, 10d, 11, 11a, 11b, 11c, 11d) gebildet ist, **dadurch gekennzeichnet, dass** die Blechteile (10, 10a, 10b, 10c, 10d, 11, 11a, 11b, 11c, 11d) gegenüber ihrer Mittelachse (m) asymmetrisch ausgebildet sind und unter Ausbildung von axialen Anschlagbereichen (12, 14) für das Dämpfungselement (8, 8a, 8b, 8d) gegensinnig aneinander angelegt sind.

2. Fliehkraftpendel (1) nach Anspruch 1, **dadurch gekennzeichnet, dass** das Dämpfungselement (8, 8a, 8b, 8d) in Umfangsrichtung betrachtet einen mittleren Führungsbereich (21) und zwei endseitige Ausnehmungen (13, 15) für axiale Anschlagbereiche (12, 14) für die Blechteile (10, 10a, 10b, 10c,10d, 11, 11a, 11b, 11c, 11d) aufweist.

3. Fliehkraftpendel (1) nach Anspruch 2, **dadurch gekennzeichnet, dass** die Blechteile mittels des Dämpfungselements (8, 8a, 8b) axial gegeneinander gesichert sind.

4. Fliehkraftpendel (1) nach Anspruch 1, **dadurch gekennzeichnet, dass** die Blechteile (10a, 11a) radial innen jeweils eine axial eingeformte Anprägung (25a) aufweisen und das Dämpfungselement (8a) mittels radial erweiterter Wangen (26a) in die Anprägungen (25a) unter Bildung planer Oberflächen des Pendels (4a) erstreckt sind.

5. Fliehkraftpendel (1) nach einem der Ansprüche 1 bis 4, **dadurch gekennzeichnet, dass** das Dämpfungselement (8b) axial zwischen den beiden Blechteilen (10b, 11b) einen Pufferbereich (27b) bildet.

6. Fliehkraftpendel (1) nach einem der Ansprüche 1 bis 5, **dadurch gekennzeichnet, dass** die beiden Blechteile (10d, 11d) miteinander vernietet sind.

7. Fliehkraftpendel (1) nach einem der Ansprüche 1 bis 6, **dadurch gekennzeichnet, dass** das Dämpfungselement (8, 8a, 8b, 8d) an zumindest einem umfangsseitigen Ende der Pendel (4, 4a, 4b, 4c, 4d) einen Anschlagpuffer (16) für ein in Umfangsrichtung benachbartes Pendel (5) bildet.

8. Fliehkraftpendel (1) nach einem der Ansprüche 1 bis 7, **dadurch gekennzeichnet, dass** der Pendelflansch (2) aus zwei Trägerteilen (3) gebildet ist, welche die Pendel (4, 4a, 4b, 4c, 4d, 5) axial zwischen sich aufnehmen.

9. Fliehkraftpendel (1) nach Anspruch 8, **dadurch gekennzeichnet, dass** die beiden Blechteile (10c, 11c) mit den Trägerteilen (3) mittels eines zwischen den beiden Blechteilen (10c, 11c) angeordneten, axial wirksamen Energiespeichers (28c) in Reibeingriff stehen.

## Claims

1. Centrifugal force pendulum (1) having a pendulum flange (2) which is arranged such that it can be rotated about a rotational axis (d), and having pendulums (4, 4a, 4b, 4c, 4d, 5) which are arranged distributed over the circumference and are received on the rotating pendulum flange so as to swing in the centrifugal force field thereof, at least one part of the pendulums (4, 4a, 4b, 4c, 4d) being formed in each case from two sheet metal parts (10, 10a, 10b, 10c, 10d, 11, 11a, 11b, 11c, 11d) which are of identical configuration and receive, in an axially secured manner, a damping element (8, 8a, 8b, 8d) which is arranged radially on the inside on the pendulums (4, 4a, 4b, 4c, 4d), **characterized in that** the sheet metal parts (10, 10a, 10b, 10c, 10d, 11, 11a, 11b, 11c, 11d) are of asymmetrical configuration with respect to their centre axis (m) and are laid against one another in opposite directions with the configuration of axial stop regions (12, 14) for the damping element (8, 8a, 8b, 8d) .

2. Centrifugal force pendulum (1) according to Claim 1, **characterized in that**, as viewed in the circumferential direction, the damping element (8, 8a, 8b, 8d) has a middle guide region (21) and two end-side recesses (13, 15) for axial stop regions (12, 14) for the sheet metal parts (10, 10a, 10b, 10c, 10d, 11, 11a, 11b, 11c, 11d).

3. Centrifugal force pendulum (1) according to Claim 2, **characterized in that** the sheet metal parts are secured axially against one another by means of the damping element (8, 8a, 8b).

4. Centrifugal force pendulum (1) according to Claim 1, **characterized in that**, radially on the inside, the sheet metal parts (10a, 11a) in each case have an axially formed indentation (25a), and the damping element (8a) extends by means of radially widened cheeks (26a) into the indentations (25a) with the formation of planar surfaces of the pendulum (4a).

5. Centrifugal force pendulum (1) according to one of Claims 1 to 4, **characterized in that** the damping element (8b) forms a buffer region (27b) axially between the two sheet metal parts (10b, 11b).

6. Centrifugal force pendulum (1) according to one of Claims 1 to 5, **characterized in that** the two sheet metal parts (10d, 11d) are riveted to one another.

7. Centrifugal force pendulum (1) according to one of Claims 1 to 6, **characterized in that**, at at least one circumferential-side end of the pendulums (4, 4a, 4b, 4c, 4d), the damping element (8, 8a, 8b, 8d) forms a stop buffer (16) for a pendulum (5) which is adjacent in the circumferential direction.

8. Centrifugal force pendulum (1) according to one of Claims 1 to 7, **characterized in that** the pendulum flange (2) is formed from two carrier parts (3) which receive the pendulums (4, 4a, 4b, 4c, 4d, 5) axially between them.

9. Centrifugal force pendulum (1) according to Claim 8, **characterized in that** the two sheet metal parts (10c, 11c) are in frictional engagement with the carrier parts (3) by means of an axially acting energy store (28c) which is arranged between the two sheet metal parts (10c, 11c).

## Revendications

1. Pendule inertiel (1) présentant une bride (2) de pendule disposée à rotation autour d'un axe de rotation (d) et des pendules (4, 4a, 4b, 4c, 4d, 5) répartis à la périphérie, oscillant pendulairement dans le champ inertiel de la bride rotative du pendule sur laquelle ils sont repris, au moins une partie des pendules (4, 4a, 4b, 4c, 4d) étant formée de deux pièces (10, 10a, 10b, 10c, 10d, 11, 11a, 11b, 11c, 11d) en tôle de forme similaire, reprenant de manière bloquée axialement un élément d'amortissement (8, 8a, 8b, 8d) disposé sur les pendules (4, 4a, 4b, 4c, 4d),
**caractérisé en ce que**
les pièces (10, 10a, 10b, 10c, 10d, 11, 11a, 11b, 11c, 11d) en tôle sont asymétriques par rapport à leur axe central (m) et sont placées les unes contre les autres en sens opposé en formant des parties (12, 14) de butée axiale pour l'élément d'amortissement (8, 8a, 8b, 8d).

2. Pendule inertiel (1) selon la revendication 1, **caractérisé en ce que** l'élément d'amortissement (8, 8a, 8b, 8d) présente dans la direction périphérique une partie centrale de guidage (21) et deux découpes d'extrémité (13, 15) pour des parties (12, 14) de butée axiale des pièces (10, 10a, 10b, 10c, 10d, 11, 11a, 11b, 11c, 11d) en tôle.

3. Pendule inertiel (1) selon la revendication 2, **caractérisé en ce que** les pièces en tôle sont bloquées axialement les unes contre les autres au moyen de l'élément d'amortissement (8, 8a, 8b).

4. Pendule inertiel (1) selon la revendication 1, **caractérisé en ce que** les pièces (10a, 11a) en tôle présentent radialement vers l'intérieur un relief axial (25a) et **en ce que** l'élément d'amortissement (8a) s'étend dans les reliefs axiaux (25a) au moyen de joues (26a) évasées radialement, en formant des surfaces planes du pendule (4a).

5. Pendule inertiel (1) selon l'une des revendications 1 à 4, **caractérisé en ce que** l'élément d'amortissement (8b) forme une zone tampon (27b) axialement entre les deux pièces en tôle (10b, 11b).

6. Pendule inertiel (1) selon l'une des revendications 1 à 5, **caractérisé en ce que** les deux pièces en tôle (10d, 11d) sont rivetées l'une sur l'autre.

7. Pendule inertiel (1) selon l'une des revendications 1 à 6, **caractérisé en ce que** l'élément d'amortissement (8, 8a, 8b, 8d) forme un tampon de butée (16) pour un pendule (5) voisin dans la direction périphérique en au moins une extrémité périphérique des pendules (4, 4a, 4b, 4c, 4d).

8. Pendule inertiel (1) selon l'une des revendications 1 à 7, **caractérisé en ce que** la bride (2) de pendule est formée de deux pièces de support (3) qui reprennent axialement entre elles les pendules (4, 4a, 4b, 4c, 4d, 5).

9. Pendule inertiel (1) selon la revendication 8, **caractérisé en ce que** les deux pièces de tôle (10c, 11c) s'engagent par frottement sur les pièces de support (3) au moyen d'un accumulateur d'énergie (28c) disposé entre les deux pièces de tôle (10c, 11c) et agissant axialement.
